# EUROPÄISCHE PATENTSCHRIFT

(11) **EP 2 404 303 B1**
(45) Veröffentlichungstag und Bekanntmachung des Hinweises auf die Patenterteilung: **28.11.2012**
(21) Anmeldenummer: 10705821.6
(22) Anmeldetag: 24.02.2010
(51) Int. Cl.: H01F 27/38, H01F 38/14, B60L 5/00, H02J 5/00

(54) **ANLAGE MIT FAHRZEUGEN**
SYSTEM HAVING VEHICLES
INSTALLATION AVEC DES VÉHICULES

(30) Priorität: 03.03.2009 DE 102009013103
(43) Veröffentlichungstag der Anmeldung: 11.01.2012
(73) Patentinhaber: SEW-EURODRIVE GmbH & Co. KG, 76646 Bruchsal (DE)
(72) Erfinder: SCHNEIDER, Bernhard, 68794 Oberhausen-Rheinhausen (DE); HILLIGARDT, Micha, 76646 Bruchsal (DE); MAHLEIN, Jochen, 76139 Karlsruhe (DE)
(86) Internationale Anmeldenummer: PCT/EP2010/001133
(87) Internationale Veröffentlichungsnummer: WO 2010/099888

(56) Entgegenhaltungen:
- JP-A- 9 065 502
- US-B1- 6 252 386

## Beschreibung

Die Erfindung betrifft eine Anlage mit Fahrzeugen.

Induktiv versorgbare Fahrzeuge sind allgemein bekannt. Hierbei wird ein Fahrzeug entlang eines Primärleiters verfahren und aus diesem über eine Sekundärwicklung versorgt.

Aus der US 6 252 386 B1, welche als nächstliegender stand der technik angesehen wird, ist eine Sekundärspule einer Vorrichtung zur kontaktlosen Übertragung elektrischer Leistung aus einem Primärleiter bekannt.

Aus der JP 09 065502 A ist ebenfalls eine Vorrichtung zur kontaktlosen Übertragung elektrischer Leistung aus einem Primärleiter an eine Sekundärspule bekannt.

Der Erfindung liegt daher die Aufgabe zugrunde, eine Anlage mit Fahrzeugen weiterzubilden, wobei eine größere Komplexität an Transportaufgaben lösbar sein soll.

Erfindungsgemäß wird die Aufgabe bei der Anlage mit Fahrzeugen nach den in Anspruch 1 angegebenen Merkmalen gelöst.

Wichtige Merkmale der Erfindung bei der Anlage mit Fahrzeugen sind, dass sie jeweils eine Sekundärwicklung zur induktiven Versorgung des Fahrzeugs aus einem in der Anlage verlegten Primärleitersystem umfasst,
**wobei**
die Sekundärwicklung einen Spulenkern umfasst, der zumindest einen Hauptschenkel aufweist,
wobei die Sekundärwicklung aus einer ersten und einer zweiten Wicklung zusammengesetzt ist, welche jeweil aus Windungen zusammengesetzt sind, die jeweils den Hauptschenkel. umfassen,
wobei die erste Wicklung derart ausgeführt ist, dass
- die Windungen in Reihe geschaltet sind und
- die an der Wicklung auftretende Induktionsspannung der Summe der an allen Windungen induzierten Einzelspannungen entspricht, wenn der von einer jeweiligen Windung umfasste Magnetfluss im Hauptschenkel stets die gleiche Richtung aufweist, insbesondere bei jeder Windung der ersten Wicklung,
wobei die zweite Wicklung derart ausgeführt ist, dass
- die zweite Wicklung aus einer ersten Sorte von Windungen, also erste Teilwicklung, und aus einer zweiten Sorte von Windungen, also zweite Teilwicklung, zusammengesetzt ist,
- alle Windungen in Reihe geschaltet sind und
- die an der zweiten Wicklung auftretende Induktionsspannung der Differenz der Summenspannung aller an den Windungen erster Sorte induzierten Einzelspannungen und der Summenspannung aller an den Windungen zweiter Sorte induzierten Einzelspannungen entspricht, wenn der von einer jeweiligen Windung umfasste Magnetfluss im Hauptschenkel stets die gleiche Richtung aufweist, insbesondere bei jeder Windung der zweiten Wicklung.

Von Vorteil ist dabei, dass nicht nur bei linienhafter Bewegung des Fahrzeugs eine induktive Versorgung aus dem Primärleitersystem sondern auch bei Bewegung in der Fläche, also abweichend von der spurgeführten Bewegung entlang der Linie des Primärleiters ermöglicht ist. Wenn also mehrere Primärleiter parallel verlegt sind, ist ein Wechsel von einem zum nächstbenachbarten ohne totalen Verlust der Energieversorgung ermöglicht. Insbesondere sind die nächstbenachbarten Primärleiter mit entgegengesetzter Stromrichtung bestrombar und somit eine Versorgung über die erste oder über die zweite Wicklung ermöglicht.

Denn beim Übergang vom ersten Primärleiter zum benachbarten dringt zeitweise Fluss durch den zwischen den Teilwicklungen der zweiten Wicklung der Sekundärwicklung liegenden Bereich des Hauptschenkels ein. Dann ist zwar der Fluss im Hauptschenkel nicht mehr gleichförmig über die ganze Ausdehnung desselben gesehen und es ist somit auch keine Spannung an der ersten Wicklung induzierbar, jedoch ist an der zweiten Wicklung Spannung induzierbar, da diese aus zwei Teilwicklungen mit gegenläufigem Wicklungssinn besteht und somit trotzdem Spannung induzierbar ist.

Die Ausgänge beider Wicklungen, also der ersten und der zweiten Wicklung, sind einem jeweiligen Gleichrichter zuführbar und deren Ausgänge parallel verschaltbar. Auf diese Weise ist eine dauerhaft vorhandene, nur wenig schwankende Gleichspannung bereitstellbar beim Übergang des Fahrzeugs vom Beriech des ersten zum benachbarten Primärleiter.

Mittels der Kompensation der Induktivitäten der Sekundärwicklung mittels zugeschalteter Kapazitäten, die auf den im Primärleiter eingeprägten Wechselstrom abgestimmt sind, ist auch bei veränderlichem Abstand zwischen Sekundärwicklung und nächstgelegenem Primärleiter ein hoher Wirkungsgrad erreichbar.

Bei einer vorteilhaften Ausgestaltung weist der Spulenkern einen zum Boden hin gerichteten Mittelschenkel auf. Von Vorteil ist dabei, dass der vom im Boden verlegten Primärleitersystem her kommende Fluss fokussiert wird und somit der magnetische Widerstand verringerbar ist, also die induktive Kopplung verbesserbar und somit auch der Wirkungsgrad.

Bei einer vorteilhaften Ausgestaltung sind die erste und zweite Teilwicklung der zweiten Wicklung voneinander beanstandet, insbesondere in Richtung des Hauptschenkels. Von Vorteil ist dabei, dass magnetischer Fluss der in dem Abstandsbereich vom Boden her in den Hauptschenkel eindringt und teilweise nach rechts und teilweise nach links im Hauptschenkel weitergeleitet wird, also einen ungleich gerichteten Fluss im Hauptschenkel bewirkt, trotzdem eine Induktionsspannung an der Reihenschaltung der beiden Teilwicklungen bewirkt.

Bei einer vorteilhaften Ausgestaltung ist zwischen erster und zweiter Teilwicklung der zweiten Wicklung ein Mittelschenkel angeordnet, insbesondere ein in Richtung auf den Boden hin gerichteter Mittelschenkel. Von Vorteil ist dabei, dass der Fluss konzentriert wird und somit der Wirkungsgrad verbessert.

Bei einer vorteilhaften Ausgestaltung sind an den Enden des Hauptschenkels Seitenschenkel angeordnet, insbesondere derart, dass der Spulenkern E-förmig, C-förmig oder U-förmig ist, wobei die offene Seite zum Boden hin gerichtet ist. Von Vorteil ist dabei, dass eine noch weiter verbesserte Flussführung ermöglicht ist.

Bei einer vorteilhaften Ausgestaltung ist die erste Wicklung aus zwei oder mehr Teilwicklungen ausgeführt. Von Vorteil ist dabei, dass die Teilwicklungen vor und hinter dem Mittelschenkel anordenbar sind.

Bei einer vorteilhaften Ausgestaltung ist oder sind die erste und/oder zweite Teilwicklung der zweiten Wicklung wiederum aus zwei oder mehr Teilwicklungen jeweils zusammengesetzt. Von Vorteil ist dabei, dass eine jeweilige Kompensation ausführbar ist und somit die auftretende Spitzenspannung in den Wicklungen reduzierbar ist, also der Isolationsabstand zwischen den Teilwicklungen und Wicklungen verringerbar ist.

Bei einer vorteilhaften Ausgestaltung sind die erste und zweite Teilwicklung der zweiten Wicklung gleich groß ausgeführt, insbesondere also die gleiche Anzahl an Windungen aufweisen. Von Vorteil ist dabei, dass bei vorgegebener Windungsanzahl die maximalen Spannungen an den Wicklungen induzierbar sind.

Bei einer vorteilhaften Ausgestaltung ist die Sekundärwicklung derart mit einer Kapazität kompensiert vorgesehen, ist also parallel oder in Reihe zugeschaltet vorgesehen, dass die zugehörige Resonanzfrequenz im Wesentlichen mit der oder einer Frequenz des in den Primärleiter eingeprägten Wechselstroms entspricht. Von Vorteil ist dabei, dass ein hoher Wirkungsgrad erreichbar ist auch bei schwankendem Abstand zwischen Primärleiter und Sekundärwicklung.

Bei einer vorteilhaften Ausgestaltung sind die Teilwicklungen jeweils einzeln kompensiert vorgesehen. Von Vorteil ist dabei, dass die Spitzenspannung innerhalb und an der Sekundärwicklung gering haltbar ist.

Bei einer vorteilhaften Ausgestaltung wird das Fahrzeug im Wesentlichen entlang der Primärleiter des Primärleitersystems bewegt, insbesondere mit einem Winkel von weniger als 50 ° zu dieser Richtung. Von Vorteil ist dabei, dass in der ersten Wicklung und/oder zweiten Wicklung stets genügend Spannung induziert wird, insbesondere nicht weniger als ein Minimalanteil der maximal induzierbaren Spannung. Auf diese Weise ist eine ununterbrochene Energieversorgung beim Fahren in der Ebene erreichbar.

Bei einer vorteilhaften Ausgestaltung weist das Fahrzeug einen Energiespeicher auf, so dass auch ein vom Primärleitersystem unabhängiges Bewegen des Fahrzeugs zeitweise ausführbar ist. Von Vorteil ist dabei, dass das Primärleitersystem nicht den ganzen Bereich des Bodens abdecken muss sondern nur einen Teil. Beispielsweise genügt es in einem Hauptfahrbereich eine Bodenfläche mit dem Primärleitersystem zu belegen, wobei in einem weniger befahrenen Bereich oder in einem Kurzstreckenbereich von diesem Hauptfahrbereich aus kein Primärleitersystem im Boden vorgesehen ist.

Bei einer vorteilhaften Ausgestaltung weist das Fahrzeug ein Positionserfassungssystem auf, dessen Signale einer Steuerelektronik des Fahrzeugs zugeführt werden, welche wiederum den Antrieb des Fahrzeugs steuert, insbesondere wobei die Bahn derart bestimmt wird, dass die Bereiche, in welchen das Primärleitersystem verlegt ist, berücksichtigt werden, insbesondere zur energieoptimierten Ausführung von Transporten innerhalb der Anlage. Von Vorteil ist dabei, dass die Bahn des Fahrzeugs derart steuerbar ist, dass eine energieoptimierte Strecke auswählbar ist. Insbesondere ist in den mit Primärleiter versorgten Bereichen eine hohe Fahrleistung gewährleistbar und in den anderen Bereichen nur geringe Fahrleistungen.

Bei einer vorteilhaften Ausgestaltung weist das Fahrzeug eine Datenaustauschverbindung mit einem zentralen Rechner der Anlage auf. Von Vorteil ist dabei, dass die Ermittelung der Wege zentral ausführbar oder Wege zentral vorgebbar sind. Alternativ ermittelt das Fahrzeug seinen Weg und teilt seine Position, Geschwindigkeit und prognostizierte oder vorgesehene Wegdaten mit, wodurch der zentrale Rechner den Stromwert im Primärleitersystem auf einen Wert begrenzt, welcher den Bedarf des Fahrzeugs nach Eintreten in den von diesem Primärleiter versorgten Bereich deckt.

Bei einer vorteilhaften Ausgestaltung weist das Fahrzeug ein mit dem Primärleitersystem zusammenwirkende Spurführungssystem und ein Antikollisionssystem auf. Von Vorteil ist dabei, dass auch spurgeführte Bewegungen ausführbar sind, also als Primärleiter verlegte Linienleiter zur Orientierung des Fahrzeugs erkennbar sind. Somit ist ein bedarfsabhängiges spurgeführtes Fahren ermöglicht. Darüber hinaus ist ein Abweichen von dem spurgeführten Bereich auch erlaubt, wobei hierzu die Bahn auf andere Weise gesteuert werden muss, beispielsweise durch ein Positionserfassungssystem oder ein Zielführungssystem. Mittels der Spurführung ist das Fahrzeug sehr genau über oder genau zwischen zwei linienhaft verlegten Primärleitern führbar, wodurch eine gleichmäßige Energieversorgung ermöglicht wird, also Schwankungen, wie beim Übergang zwischen zwei Primärleitern, vermieden werden.

Unter Boden wird auch Dachboden verstanden, also eine Anordnung des Primärleitersystems oberhalb des Bewegungsbereichs der Fahrzeuge. Das Primärleitersystem kann auch hängend installiert sein, muss also nicht vergossen vorgesehen sein.

Weitere Vorteile ergeben sich aus den Unteransprüchen.

### Bezugszeichenliste

- 1: Hauptschenkel
- 2: Seitenschenkel
- 3: Mittelschenkel
- 4: Boden
- 5: Primärleiter

- w_1: Teilwicklung
- w_2: Teilwicklung
- w_3: Teilwicklung
- w_4: Teilwicklung

Die Erfindung wird nun anhand von Abbildungen näher erläutert:

In der Figur 1 ist ein erstes erfindungsgemäßes Ausführungsbeispiel schematisch im Querschnitt dargestellt. Hierbei ist eine über einem Boden 4 bewegbar angeordnete Anordnung mit Mittelschenkel 3 in einer ersten Position relativ zu im Boden 4 parallel verlegten langgestreckt ausgeführten Primärleitern gezeigt.

In der Figur 2 ist der bewegbar angeordnete Teil aus Figur 1 in einer anderen Position gezeigt.

In der Figur 3 ist ein zweites erfindungsgemäßes Ausführungsbeispiel schematisch im Querschnitt dargestellt. Hierbei ist eine über einem Boden 4 bewegbar angeordnete Anordnung ohne Mittelschenkel 3 in einer ersten Position relativ zu im Boden 4 parallel verlegten langgestreckt ausgeführten Primärleitern gezeigt.

In der Figur 4 ist der bewegbar angeordnete Teil aus Figur 3 in einer anderen Position gezeigt.

In der Figur 5 ist ein beispielhafter Schaltplan für die Sekundärseite gezeigt.

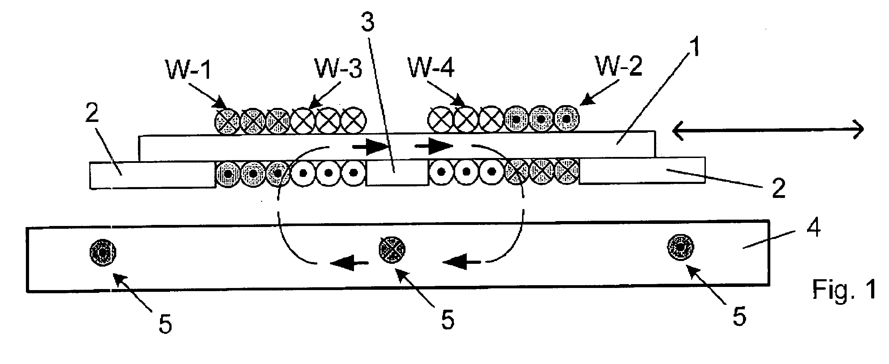

Im Boden sind mehrere langgestreckt verlegte Primärleiter vorgesehen. Beispielsweise ist dies einfach realisierbar, indem ein Primärleiterkabel mäanderförmig im Boden verlegt wird. Die Primärleiterstruktur ist auch etwas bogenförmig oder sonstig der Umgebung anpassbar. In den Figuren 1 bis 4 ist ein Querschnitt hierzu gezeigt, wobei die Abstände der Primärleiter zueinander im Wesentlichen konstant sind. Die Stromrichtung ist in benachbart verlegten Primärleitern entgegengesetzt gerichtet. Dies ergibt sich bei erwähnter mäanderförmiger Verlegung eines Kabels sozusagen automatisch.

Auf dem Boden ist ein bewegbar angeordnetes Fahrzeug vorgesehen, das den bewegbar angeordneten Teil aufweist.

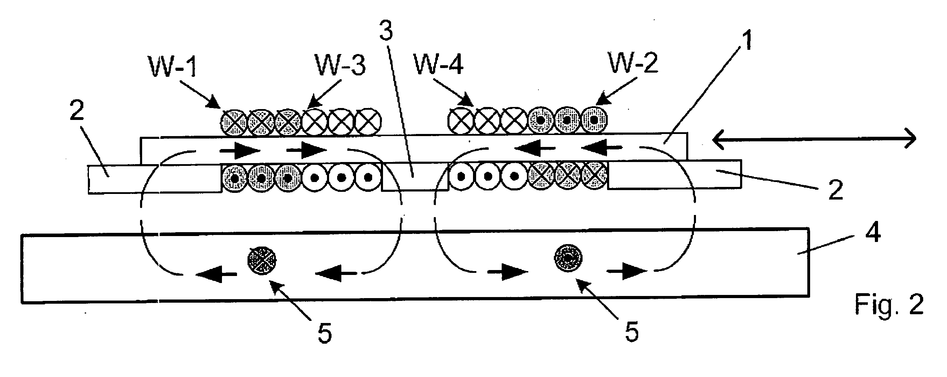

Der bewegbar angeordnete Teil umfasst gemäß Figur 1 und 2 einen mehrstückig vorgesehenen Spulenkern einer Sekundärwicklung, welcher einen Hauptschenkel 1 umfasst, an dessen äußeren Seiten zum Boden hin gerichtete Seitenschenkel 2 vorgesehen sind und etwa in der Mitte ein zum Boden hin gerichteter Mittelschenkel 3. Der prinzipielle Querschnitt des Spulenkerns entspricht also topologisch einem E.

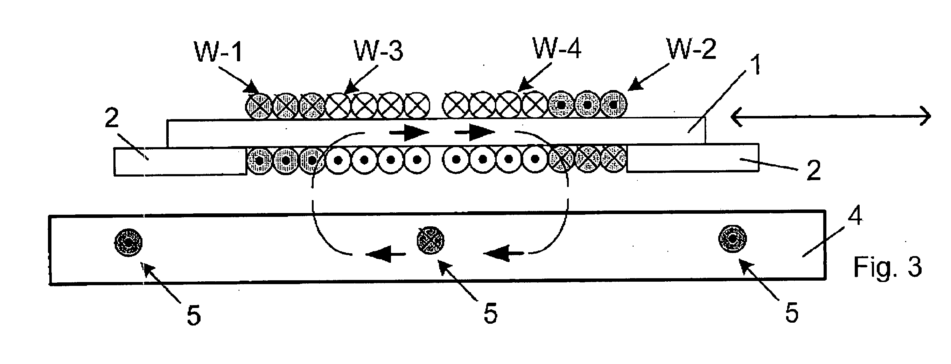

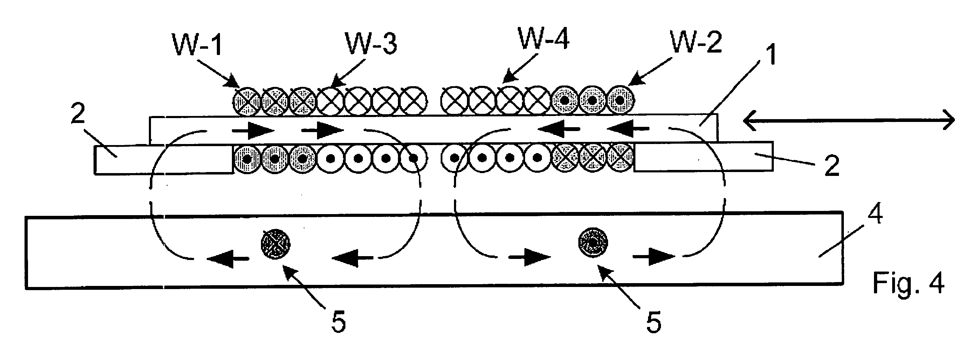

Alternativ ist auch ein Spulenkern gemäß Figuren 3 und 4 ausführbar, wobei der Mittelschenkel 3 fehlt und somit gleicht der prinzipielle Querschnitt des Spulenkerns also topologisch einem U. Analog wäre auch ein C-förmiger Querschnitt anwendbar, wobei C und U im Rahmen der Erfindung als topologisch äquivalent zu sehen sind.

Die Primärleiter 5 sind im Boden 4 in Nuten eingelegt und/oder vergossen vorgesehen.

In Weiterbildung sind die Spulenkerne der Ausführungsbeispiele auch einstückig ausführbar.

Die Sekundärwicklung umfasst insgesamt eine erste und eine zweite Wicklung, wobei zumindest die zweite Wicklung aus mindestens zwei Teilwicklungen zusammengesetzt ist.

Die Ausdehnung des Spulenkerns in Richtung der Primärleiter, also senkrecht zur Zeichnungsebene der Figuren 1 bis 4, bestimmt die übertragbare Leistung und den Wirkungsgrad wesentlich mit. Es hat sich als vorteilhaft erwiesen, eine derart große Ausdehnung vorzusehen, dass der Spulenkern von weitem gesehen plattenförmig erscheint. Die Ausdehnung der Seitenschenkel 2 und/oder des Mittelschenkels 3 in Richtung auf den Boden 4 hin ist also viel kleiner zu wählen als die Ausdehnung des Spulenkerns in Primärleiterrichtung.

Die Teilwicklungen sind derart ausgeführt, dass sie den durch den Hauptschenkel geleiteten Fluss umfassen. Dabei ist die erste Wicklung, welche die Teilwicklungen w_3 und w_4 umfasst, vorgesehen und die zweite Wicklung, welche die Teilwicklungen w_1 und w_2 umfasst.

Die erste Wicklung ist innen vorgesehen, also nahe am Mittelschenkel, wobei die Teilwicklung w_3 vor und die Teilwicklung w_4 hinter dem Mittelschenkel vorgesehen ist.

Wenn also ein homogener Magnetfluss, der auch als gleichlaufend bezeichenbar ist, im Hauptschenkel auftritt, wie in Figur 1 angedeutet, induziert dessen Änderung eine Spannung an der Teilwicklung w_3 und w_4. Dabei sind diese Teilwicklungen w_3 und w-4 zur Bildung der ersten Wicklung in Reihe verschaltet. Somit wird auch an der Reihenschaltung Spannung induziert. Wenn hingegen der nicht homogene Magnetfluss gemäß Figur 2 im Hauptschenkel auftritt, wird an der Serienschaltung der Teilwicklungen w_3 und w_4 keine wesentliche Spannung induziert. Dabei tritt ein wesentlicher Anteil des Flusses im Bereich des Mittelschenkels in den Hauptschenkel ein oder dort heraus.

Die erste Wicklung umgebend liegt eine zweite Wicklung am Hauptschenkel an, die bei dem nicht homogenen Magnetfeld nach Figur 2 eine Induktionsspannung aufweist, weil die beiden Teilwicklungen w_1 und w_2 gegenläufig gewickelt sind und entsprechend zueinander in Reihe geschaltet sind.

Wichtig ist also bei der Erfindung, dass eine erste und ein zweite Wicklung vorgesehen sind, wobei die erste gleichförmigen Wicklungssinn aufweist und die zweite aus zwei, in Reihe geschalteten Teilwicklungen (w_1, w_2) besteht, die gegenläufigen Wicklungssinn aufweisen. Dabei sind die beiden Teilwicklungen (w_1, w_2) in Richtung des Hauptschenkels 1 voneinander beabstandet. Auf diese Weise ist also an der Reihenschaltung der Teilwicklungen (w_1, w_2) Spannung induzierbar, wenn die Flussrichtung im von der jeweiligen Teilwicklung umschlossenen Bereich des Hauptschenkels entsprechend verschieden, insbesondere entgegengesetzt, orientiert ist.

Vorzugsweise ist die erste Wicklung in Hauptschenkelrichtung, also quer zur Primärleiterrichtung, aber parallel zum Boden oder parallel zur von den Primärleitern aufgespannten Ebene, zwischen den Teilwicklungen der zweiten Wicklung angeordnet.

Die erste Wicklung kann aber auch entlang des Hauptschenkels verschoben vorgesehen werden. Vorzugsweise umfasst sie aber den Hauptschenkel und somit den Magnetfluss in demselben.

Bei weiteren erfindungsgemäßen Ausführungen sind statt der zwei Teilwicklungen der zweiten Wicklung mehr Teilwicklungen vorgesehen und/oder die erste Wicklung in mehreren Teilwicklungen ausgeführt.

Bei dem erfindungsgemäßen Ausführungsbeispiel nach Figur 3 und 4 ist der Mittelschenkel entfernt. Auch bei einer solchen Ausführung wird sowohl bei im Hauptschenkel im Wesentlichen homogenem, also gleichgerichtetem, Fluss eine Spannung induziert, insbesondere in der ersten Wicklung, und bei nicht homogenem, also im von den Teilwicklungen der zweiten Wicklung umschlossenen Bereich des Hauptschenkels unterschiedlicher Flussrichtung im Hauptschenkel eine Spannung induziert, insbesondere in der zweiten Wicklung.

In der geschilderten Weise liefert die Sekundärwicklung also Induktionsspannung, wenn das Fahrzeug innerhalb der Ebene sich bewegt und beispielsweise wechselt von einer ersten Bahn, in welchem es einem ersten verlegten Primärleiter folgt, zu einer zweiten Bahn, wo es einem zweiten verlegten Primärleiter folgt.

Das Fahrzeug ist also induktiv versorgbar aus einem Primärleitersystem, wobei es in seiner Bewegung nicht eingeschränkt ist, einem einzigen Primärleiter zu folgen, also nur eine eindimensionale Bewegung ausführen zu dürfen, um das Fahrzeug elektrisch versorgt zu halten.

Eine Einspeisung prägt einen mittelfrequenten Wechselstrom ein in das Primärleitersystem.

Die Frequenz beträgt hierbei zwischen 10 und 500 kHz. Das Primärleitersystem ist als jeweilige Leiterschleife ausgeführt.

Es sind auch mehrere Fahrzeuge gleichzeitig versorgbar. Jedes Fahrzeug umfasst hierzu eine Sekundärwicklung, die induktiv an das Primärleitersystem gekoppelt ist, solange das Fahrzeug sich im Verlegebereich des Primärleitersystems aufhält. Das Fahrzeug umfasst elektrische Verbraucher, wie beispielsweise einen Fahrantrieb, die aus der Sekundärwicklung versorgt sind. Zusätzlich ist auch ein Energiespeicher, wie Batterie oder ein Hubwerk mit rückspeisefähigem Umrichtermotor-Antrieb vorsehbar zur Zwischenspeicherung und/oder Pufferung von Energie.

Der Sekundärwicklung ist eine Kapazität derart in Reihe oder parallel zugeschaltet, dass die zugehörige Resonanzfrequenz im Wesentlichen der Mittelfrequenz des in das Primärleitersystem eingeprägten Stromes entspricht.

Die Einspeisung umfasst einen Wechselrichter, dessen Eingangsseite eine unipolare Spannung, insbesondere Zwischenkreisspannung, ist, die mittels Gleichrichtung aus dem Versorgungsnetz, vorzugsweise ein Drehspannungsnetz, versorgbar ist. Der Wechselrichter ist pulsweitenmoduliert betreibbar und stellt ausgangsseitig eine vorzugsweise sinusförmige Spannungsquelle dar, die einen spannungs-strom-wandelnden Vierpol speist, insbesondere Gyrator, der ausgangsseitig somit ein stromquellenartiges Verhalten aufweist.

Aus diesem Vierpol wird entweder direkt oder alternativ über einen Transformator der als Leiterschleife ausgeführter Primärleiterkreis versorgt, wobei dieser ebenfalls auf die Mittelfrequenz abgestimmt wird, indem entsprechende Kapazitäten parallel oder seriell zugeschaltet werden zur Streckeninduktivität des Primärleiterkreises.

Der Vierpol, insbesondere Gyrator, weist derartige Induktivitäten und Kapazitäten auf, dass die zugehörige Resonanzfrequenz im Wesentlichen der Mittelfrequenz entspricht.

Mittels Steuerung der Amplitude der am Wechselrichter ausgangsseitig erzeugten Sinusspannung ist ein Stellen der Amplitude der den Primärleiterkreis versorgenden Stromquelle ermöglicht.

Die Einspeisung umfasst jeweils eine Steuerelektronik zur Erzeugung der pulsweitenmodulierten Ansteuersignale für den Wechselrichter. Außerdem umfasst die Steuerelektronik Mittel zum Datenaustausch mit einer übergeordneten Steuerung, insbesondere ist die Steuerung als Feldbusteilnehmer ausgeführt.

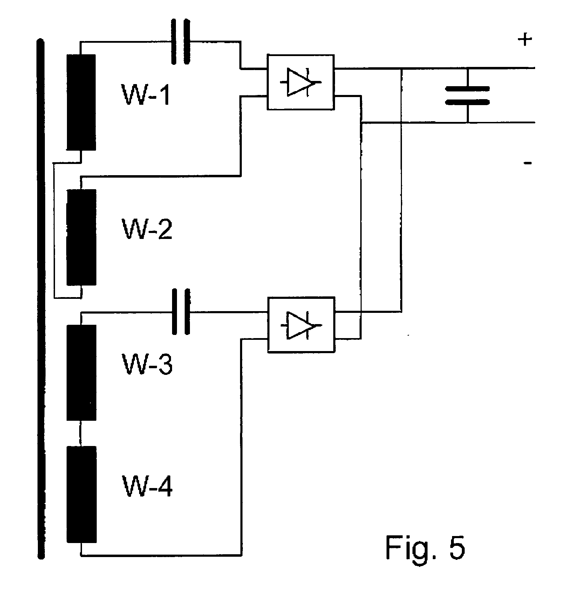

In Figur 5 ist gezeigt, dass die erste und zweite Wicklung jeweils separat kompensiert sind, also mit einer jeweiligen Kapazität in Reihe geschaltet sind. Dabei ist die Kapazität derart bemessen, dass die zugehörige Resonanzfrequenz im Wesentlichen der Frequenz eines oder des in den Primärleiter eingeprägten Wechselstroms entspricht. Vorzugsweise wird hierzu eine Frequenz zwischen 10 und 500 kHz vorgesehen. Die den Primärleiter speisende Anordnung, also Einspeisung weist eine steuerbare Spannungsquelle, umfassend einen pulsweitenmoduliert betriebenen Wechselrichter auf, dem ein Gyrator nachgeschaltet ist, also ein Spannungs-Strom-Wandler. Auf diese Weise stellt das Primärleitersystem im Wesentlichen eine Stromquelle dar. Aus dem Gyrator wird als Primärleitersystem eine Leiterschleife gespeist, der eine wiederum auf Resonanzfrequenz abgestimmte Kapazität zugeschaltet vorgesehen ist. Dabei ist die Leiterschleife mäanderförmig im Boden verlegt, insbesondere vergossen vorgesehen.

## Patentansprüche

1. Anlage mit Fahrzeugen, umfassend jeweils eine Sekundärwicklung zur induktiven Versorgung des Fahrzeugs aus einem in der Anlage verlegten Primärleitersystem,
wobei die Sekundärwicklung einen Spulenkern umfasst, der zumindest einen Hauptschenkel (1) aufweist,
wobei die Sekundärwicklung aus einer ersten und einer zweiten Wicklung zusammengesetzt ist, welche jeweils aus Windungen zusammengesetzt sind, die jeweils den Hauptschenkel umfassen,
wobei die erste Wicklung derart ausgeführt ist, dass
- die Windungen in Reihe geschaltet sind und
- die an der Wicklung auftretende Induktionsspannung der Summe der an allen Windungen induzierten Einzelspannungen entspricht, wenn der von einer jeweiligen Windung umfasste Magnetfluss im Hauptschenkel (1) stets die gleiche Richtung aufweist, insbesondere bei jeder Windung der ersten Wicklung,
wobei die zweite Wicklung derart ausgeführt ist, dass
- die zweite Wicklung aus einer ersten Sorte von Windungen, also erste Teilwicklung (W_1) und aus einer zweiten Sorte von Windungen, also zweite Teilwicklung (W-2) zusammengesetzt ist, und
- alle Windungen in Reihe geschaltet sind,
**dadurch gekennzeichnet, dass**
**die zweite Wicklung derart ausgeführt ist, dass**
- die an der zweiten Wicklung auftretende Induktionsspannung der Differenz der Summenspannung aller an den Windungen erster Sorte induzierten Einzelspannungen und der Summenspannung aller an den Windungen zweiter Sorte induzierten Einzelspannungen entspricht, wenn der von einer jeweiligen Windung umfasste Magnetfluss im Hauptschenkel (1) stets die gleiche Richtung aufweist, insbesondere bei jeder Windung der zweiten Wicklung.

2. Anlage nach mindestens einem der vorangegangenen Ansprüche,
**dadurch gekennzeichnet, dass**
der Spulenkern einen zum Boden (4) hin gerichteten Mittelschenkel (3) aufweist

3. Anlage nach mindestens einem der vorangegangenen Ansprüche,
**dadurch gekennzeichnet, dass**
die erste (w-1) und zweite (w-2) Teilwicklung der zweiten Wicklung voneinander beanstandet sind, insbesondere in Richtung des Hauptschenkels (1).

4. Anlage nach mindestens einem der vorangegangenen Ansprüche,
**dadurch gekennzeichnet, dass**
zwischen erster (w-1) und zweiter (w-2) Teilwicklung der zweiten Wicklung ein Mittelschenkel (3) angeordnet ist, insbesondere ein in Richtung auf den Boden (4) hin gerichteter Mittelschenkel (3).

5. Anlage nach mindestens einem der vorangegangenen Ansprüche,
**dadurch gekennzeichnet, dass**
an den Enden des Hauptschenkels (1) Seitenschenkel (2) angeordnet sind, insbesondere derart, dass der Spulenkern E-förmig, C-förmig oder U-förmig ist, wobei die offene Seite zum Boden (4) hin gerichtet ist.

6. Anlage nach mindestens einem der vorangegangenen Ansprüche,
**dadurch gekennzeichnet, dass**
die erste Wicklung aus zwei oder mehr Teilwicklungen (w-3, w-4) ausgeführt ist.

7. Anlage nach mindestens einem der vorangegangenen Ansprüche,
**dadurch gekennzeichnet, dass**
die erste (w-1) und/oder zweite (w-2) eitwicklung der zweiten Wicklung wiederum aus zwei oder mehr Teilwicklungen jeweils zusammengesetzt ist oder sind.

8. Anlage nach mindestens einem der vorangegangenen Ansprüche,
**dadurch gekennzeichnet, dass**
die erste (w-1) und zweite (w-2) Teilwicklung der zweiten Wicklung gleich groß ausgeführt sind, insbesondere also die gleiche Anzahl an Windungen aufweisen.

9. Anlage nach mindestens einem der vorangegangenen Ansprüche,
**dadurch gekennzeichnet, dass**
die Sekundärwicklung derart mit einer Kapazität kompensiert vorgesehen ist, also parallel oder in Reihe zugeschaltet vorgesehen ist, dass die zugehörige Resonanzfrequenz im Wesentlichen der oder einer Frequenz des in den Primärleiter (5) eingeprägten Wechselstroms entspricht.

10. Anlage nach mindestens einem der vorangegangenen Ansprüche
**dadurch gekennzeichnet, dass**
die Teilwicklungen jeweils einzeln kompensiert vorgesehen sind.

11. Anlage nach mindestens einem der vorangegangenen Ansprüche,
**dadurch gekennzeichnet, dass**
das Fahrzeug im Wesentlichen entlang der Primärleiter (5) des Primärleitersystems bewegt wird, insbesondere mit einem Winkel von weniger als 50 ° zu dieser Richtung.

12. Anlage nach mindestens einem der vorangegangenen Ansprüche,
**dadurch gekennzeichnet, dass**
das Fahrzeug einen Energiespeicher aufweist, so dass auch ein vom Primärleitersystem unabhängiges Bewegen des Fahrzeugs zeitweise ausführbar ist.

13. Anlage nach mindestens einem der vorangegangenen Ansprüche,
**dadurch gekennzeichnet, dass**
das Fahrzeug ein Positionserfassungssystem aufweist, dessen Signale einer Steuerelektronik des Fahrzeugs zugeführt werden, welche wiederum den Antrieb des Fahrzeugs steuert, insbesondere wobei die Bahn derart bestimmt wird, dass die Bereiche, in welchen das Primärleitersystem verlegt ist, berücksichtigt werden, insbesondere zur energieoptimierten Ausführung von Transporten innerhalb der Anlage.

14. Anlage nach mindestens einem der vorangegangenen Ansprüche,
**dadurch gekennzeichnet, dass**
das Fahrzeug eine Datenaustauschverbindung mit einem zentralen Rechner der Anlage aufweist.

15. Anlage nach mindestens einem der vorangegangenen Ansprüche,
**dadurch gekennzeichnet, dass**
das Fahrzeug ein mit dem Primärleitersystem zusammenwirkende Spurführungssystem und ein Antikollisionssystem aufweist.

## Claims

1. System having vehicles, comprising in each case a secondary coil for inductive supply of the vehicle from a primary conductor system installed in the system,
wherein the secondary coil comprises a coil core, which has at least one main limb (1),
wherein the secondary coil is composed of a first and a second coil, each being composed of windings which enclose the main limb (1) in each case,
wherein the first coil is arranged such that
- the windings are connected in series, and
- the induction voltage arising at the coil corresponds to the sum of the individual voltages induced at all windings when the magnetic flux enclosed by a respective winding in the main limb (1) always has the same direction, in particular for each winding of the first coil,
wherein the second coil is arranged such that
- the second coil is composed of a first type of windings, i.e., a first partial coil (w_1), and of a second type of windings, i.e., a second partial coil (w_2), and
- all windings are connected in series,
**characterised in that**
the second coil is arranged such that
- the induction voltage arising at the second winding corresponds to the difference of the summation voltage of all individual voltages induced at the windings of the first type, and to the sunmation voltage of all individual voltages induced at the windings of the second type, when the magnetic flux enclosed by a respective winding in the main limb (1) always has the same direction, in particular for each winding of the second coil.

2. System according to at least one of the preceding claims,
**characterised in that**
the coil core has a centre limb (3) pointing towards the floor (4).

3. System according to at least one of the preceding claims,
**characterised in that**
the first (w_1) and second (w_2) partial coil of the second coil are set apart from one another, in particular in the direction of the main limb (1).

4. System according to at least one of the preceding claims,
**characterised in that**
a centre limb (3) is arranged between the first (w_1) and second (w_2) partial coil of the second coil, in particular a centre limb (3) pointing towards the floor (4).

5. System according to at least one of the preceding claims,
**characterised in that**
side limbs (2) are arranged at ends of the main limb (1), in particular such that the coil core is E-shaped, C-shaped or U-shaped, the open side pointing towards the floor (4).

6. System according to at least one of the preceding claims,
**characterised in that**
the first coil is formed of two or more partial ceils (w_3, w_4).

7. System according to at least one of the preceding claims,
**characterised in that**
the first (w_1) and/or second (w_2) partial coil of the second coil once again is or are composed of two or more partial coils in each case.

8. System according to at least one of the preceding claims,
**characterised in that**
the first (w_1) and second (w_2) partial coil of the second coil are of equal size, that is to say in particular have the same number of windings.

9. System according to at least one of the preceding claims,
**characterised in that**
the secondary coil is provided in capacitance-compensated form, i.e., is provided in a form connected in parallel or in series, such that the associated resonant frequency substantially corresponds to the or a frequency of the alternating current impressed on the primary conductor (5).

10. System according to at least one of the preceding claims,
**characterised in that**
the partial coils are provided in individually compensated form in each case.

11. System according to at least one of the preceding claims,
**characterised in that**
the vehicle is substantially moved along the primary conductor (5) of the primary conductor system, in particular at an angle of less than 50° relative to this direction.

12. System according to at least one of the preceding claims,
**characterised in that**
the vehicle includes an energy store, so that the vehicle at times is also movable independently of the primary conductor system.

13. System according to at least one of the preceding claims,
**characterised in that**
the vehicle includes a position detection system, whose signals are supplied to control electronics of the vehicle, which in turn control the drive of the vehicle, in particular the path being determined such that the regions in which the primary conductor system is installed are taken into account, in particular for carrying out energy-optimised transport operations within the system.

14. System according to at least one of the preceding claims,
**characterised in that**
the vehicle includes a data exchange connection to a central computer of the system,

15. System according to at least one of the preceding claims,
**characterised in that**
the vehicle includes a track guidance system cooperating with the primary conductor system, and an anti-collision system.

## Revendications

1. Installation avec des véhicules, qui comprennent chacun un bobinage secondaire pour alimenter par induction le véhicule à partir d'un système de conducteurs primaires posé dans l'installation,
sachant que le bobinage secondaire entoure un noyau de bobine qui présente au moins une branche principale (1),
sachant que le bobinage secondaire est composé d'un premier bobinage et d'un deuxième bobinage qui sont respectivement composés d'enroulements qui entourent respectivement la branche principale (1),
sachant que le premier bobinage est réalisé de telle sorte que
- les enroulements sont montés en série et
- la tension inductive apparaissant sur le bobinage correspond à la somme des tensions individuelles induites sur tous les enroulements, si le champ magnétique englobé par un enroulement respectif dans la branche principale (1) présente toujours la même direction, en particulier pour chaque enroulement du premier bobinage,
sachant que le deuxième bobinage est réalisé de telle sorte que
- le deuxième bobinage est composé d'un premier type d'enroulements, donc un premier bobinage partiel (W-1), et d'un deuxième type d'embulements, donc un deuxième bobinage partiel (W-2), et
- tous les enroulements sont montés en série,
**caractérisée en ce que**
le deuxième bobinage est réalisé de telle sorte que
- la tension inductive apparaissant sur le deuxième bobinage correspond à la différence de la somme de toutes les tensions individuelles induites sur les enroulements du premier type et de la somme de toutes les tensions individuelles induites sur les enroulements du deuxième type, si le champ magnétique englobé par un enroulement respectif dans la branche principale (1) présente toujours la même direction, en particulier pour chaque enroulement du deuxième bobinage.

2. Installation selon la revendication 1, **caractérisée en ce que** le noyau de bobine présente une branche médiane (3) dirigée vers le fond (4).

3. Installation selon au moins une des revendications précédentes, **caractérisée en ce que** le premier et le deuxième bobinages partiels (W-1, W-2) du deuxième bobinage sont distants entre eux, notamment dans la direction de la branche principale (1).

4. Installation selon au moins une des revendications précédentes, **caractérisée en ce qu'**une branche médiane (3), en particulier une branche médiane (3) dirigée en direction du fond (4), est disposée entre le premier et le deuxième bobinages partiels (W-1, W-2) du deuxième bobinage.

5. Installation selon au moins une des revendications précédentes, **caractérisée en ce que** des branches latérales (2) sont disposées aux extrémités de la branche principale (1), en particulier de telle sorte que le noyau de bobine est en forme de E, en forme de C ou en forme de U, tachant que le côté ouvert est dirigé vers le fond (4).

6. Installation selon au moins une des revendications précédentes, **caractérisée en ce que** le premier bobinage est constitué de deux ou plusieurs bobinages partiels (W-3, W-4).

7. Installation selon au moins une des revendications précédentes, **caractérisée en ce que** le premier et/ou le deuxième bobinages partiels (W-1, W-2) du deuxième bobinage sont eux-mêmes respectivement composés de deux ou plusieurs bobinages partiels.

8. Installation selon au moins une des revendications précédentes, **caractérisée en ce que** le premier et le deuxième bobinages partiels W-1, W-2) du deuxième bobinage sont réalisés de même taille, en particulier présentent donc le même nombre d'enroulements.

9. Installation selon au moins une des revendications précédentes, **caractérisée en ce que** le bobinage secondaire est prévu compensé par un condensateur, donc est prévu monté en parallèle ou en série avec un condensateur, de telle sorte que la fréquence de résonance correspondante correspond sensiblement à la ou à une fréquence du courant alternatif injecté dans les conducteurs primaires (5).

10. Installation selon au moins une des revendications précédentes, **caractérisée en ce que** les bobinages partiels sont chacun prévus individuellement compensés.

11. Installation selon au moins une des revendications précédentes, **caractérisée en ce que** le véhicule est déplacé sensiblement le long des conducteurs primaires (5) du système de conducteurs primaires, en particulier avec un angle inférieur à 50° par rapport à cette direction.

12. Installation selon au moins une des revendications précédentes, **caractérisée en ce que** le véhicule présente un accumulateur d'énergie, de sorte qu'un déplacement du véhicule indépendant du système de conducteurs primaires peut également être temporairement effectue.

13. Installation selon au moins une des revendications précédentes, **caractérisée en ce que** le véhicule présente un système de détection de position dont les signaux sont apportés à une équipement élecctronique de commande du véhicule, équipement qui commande lui-même l'entraînement du véhicule, sachant Notamment que le parcours est défini de telle sorte que les régions dans lesquelles le système de conducteurs primaires est posé sont prises en compte, en particulier pour une réalisation énergétiquement optimisée des transports à l'intérieur de l'installation.

14. Installation selon au moins une des revendications précédentes, **caractérisée en ce que** le véhicule présente une liaison d'échange de données avec un calculateur central de l'installation,

15. Installation selon au moins une des revendications précédentes, **caractérisée en ce que** le véhicule présente un système de guidage coopérant avec le système de conducteurs primaires, et un système anticollision.
